# FASCICULE DE BREVET EUROPEEN

(11) **EP 4 577 453 B1**
(45) Date de publication et mention de la délivrance du brevet: **25.03.2026**
(21) Numéro de dépôt: 23772295.4
(22) Date de dépôt: 21.08.2023
(51) Int. Cl.: B64C 11/06, F01D 5/30, B64C 11/26, B64D 27/00

(54) **AUBAGE FIXE DE TURBOMACHINE COMPRENANT DES AUBES À CALAGE VARIABLE**
FESTSTEHENDE SCHAUFELANORDNUNG FÜR EINEN TURBINENMOTOR MIT SCHAUFELN MIT VERSTELLBAREM BLATTWINKEL
FIXED VANE ASSEMBLY FOR A TURBINE ENGINE COMPRISING VARIABLE-PITCH BLADES

(30) Priorité: 22.08.2022 FR 2208437
(43) Date de publication de la demande: 02.07.2025
(73) Titulaire: SAFRAN AIRCRAFT ENGINES, 75015 Paris (FR)
(72) Inventeur: IGLESIAS CANO, Celia, 77550 MOISSY-CRAMAYEL (FR); JOUDON, Vincent, 77550 MOISSY-CRAMAYEL (FR)
(74) Mandataire: Regimbeau
(86) Numéro de dépôt international: PCT/FR2023/051284
(87) Numéro de publication internationale: WO 2024/042293

(56) Documents cités:
- EP-B1- 1 024 081
- DE-A1- 102019 001 830
- FR-A1- 3 113 647
- US-B1- 11 073 030

## Description

### DOMAINE TECHNIQUE

La présente demande concerne le domaine des turbomachines, en particulier un aubage fixe d'une turbomachine, par exemple un aubage fixe comprenant des aubes de stator à calage variable, chacune fixée à un pivot. L'invention s'applique notamment au redresseur non caréné de turbomachine ou au redresseur caréné d'une turbomachine.

### ETAT DE LA TECHNIQUE

Des turbomachines comprenant au moins une hélice non carénée sont connues sous le terme anglais « open rotor » ou « unducted fan ». De telles turbomachines peuvent comprendre deux hélices non carénées et contrarotatives (connues sous l'acronyme anglais CROR pour « Contra-Rotating Open Rotor ») ou une seule hélice non carénée et un redresseur comprenant plusieurs aubes de stator (connues sous l'acronyme anglais USF pour « Unducted Single Fan »). Les hélices peuvent être placées à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne. Cela permet d'augmenter le taux de dilution de façon très importante sans être pénalisé par la masse des carters ou nacelles destinées à entourer les pales de l'hélice ou soufflante.

Les aubes de stator du redresseur sont installées généralement sur un moyeu qui porte le bec de séparation des flux primaire et secondaire circulant respectivement dans une veine primaire et autour du carter d'entrée. Contrairement à l'hélice amont d'une turbomachine de type USF, les aubes de stator du redresseur sont fixes en rotation par rapport à l'axe de rotation de l'hélice amont et par conséquent ne subissent pas d'effort centrifuge.

Les aubes de stator s'étendent depuis le carter d'entrée et sont avantageusement à calage variable. A cet effet, chaque pied d'aube de stator est monté pivotant suivant un axe de calage et relié à un système de changement de pas monté dans la turbomachine. La zone d'intégration du pied et du pivot de l'aube de stator est une zone fortement contrainte par la présence de nombreux équipements autour de ceux-ci.

En outre, dans de telles turbomachines où un gain de poids est recherché, les aubes de stator sont de préférence réalisées en matériau composite comprenant un renfort fibreux noyé dans une matrice organique.

Le document FR 3 113 647 A1 décrit notamment une hélice non carénée à calage variable. Le document US 11,073,030 B1 décrit notamment une fixation d'aubage pour turbine à gaz. Le document DE 10 2019 001 830 A1 décrit notamment une pale composite.

Les technologies actuelles de fixation d'hélices ne répondent cependant pas au besoin de fixation des aubes de stator d'une turbomachine de type USF car elles sont configurées pour plaquer le pied de l'aubage dans une fixation alvéolaire grâce aux efforts centrifuges générés par la rotation de l'aubage. Or, dans un aubage statique, l'absence de rotation et donc de force centrifuge empêche le recours à ce moyen de fixation simple et bien connu. Les aubes des aubages statiques sont donc généralement fixées par boulonnage sur une attache métallique. Ces attaches sont cependant encombrantes radialement ou tangentiellement, ce qui pose des difficultés d'intégration dans la turbomachine.

### EXPOSE

Un but de la présente demande est de remédier aux inconvénients précités, en proposant un système de fixation des aubes à calage variable d'un aubage statique d'une turbomachine, dont l'encombrement radial et tangentiel soit réduit tout en garantissant un maintien adapté des aubes de l'aubage statique.

Il est à cet effet proposé, selon un premier aspect, une aube d'un aubage statique d'une turbomachine comprenant :
- un pied d'aube comprenant un renfort fibreux noyé dans une matrice, le renfort fibreux comprenant une première peau et une deuxième peau séparées par une cavité ouverte sur une face inférieure du pied d'aube ;
- une attache configurée pour recevoir le pied d'aube et le fixer à un moyeu de l'aubage, l'attache comprenant une plateforme et une nervure faisant saillie depuis la plateforme, la nervure étant configurée pour pénétrer dans la cavité de sorte à s'étendre entre des faces internes de la première peau et de la deuxième peau ; et
- un système de fixation configuré pour fixer mécaniquement la première peau et la deuxième peau à la nervure de l'attache, le système de fixation traversant la première peau, la nervure et la deuxième peau.

Certaines caractéristiques préférées mais non limitatives de l'aube selon le premier aspect sont les suivantes, prises individuellement ou en combinaison :
- la nervure comprend deux flancs reliés à la plateforme et un sommet raccordant les deux flancs, une épaisseur de la nervure étant décroissante de la plateforme en direction du sommet et les faces internes des peaux peuvent être plus évasées que les flancs de la nervure ; en variante, la nervure comprend deux flancs reliés à la plateforme et un sommet raccordant les deux flancs, une épaisseur de la nervure étant sensiblement constante de la plateforme en direction du sommet ; selon une autre variante encore, la nervure comprend deux flancs courbes concaves de sorte qu'une épaisseur de la nervure décroît de la plateforme en direction du sommet ;
- la première et la deuxième peau sont en outre en butée contre la plateforme ;
- le système de fixation comprend l'un au moins des éléments suivants : un boulon ; une plaque conformée pour venir en contact avec une face externe des peaux ;
- le système de fixation comprend un boulon traversant la première peau, la nervure et la deuxième peau ;
- l'aube comprend en outre une pièce de conformation logée dans la cavité à distance d'un sommet de la nervure ;
- la pièce de conformation comprend un matériau composite supplémentaire comprenant un renfort fibreux supplémentaire noyé dans une matrice supplémentaire, le renfort fibreux supplémentaire comprenant des fibres présentant un module d'Young au moins égal à 5 GPa, par exemple des fibres de carbone, d'aramide, de verre ou de basalte ;
- l'aube comprend en outre une pièce de remplissage logée dans la cavité entre un sommet de l'aube et la pièce de conformation, la pièce de remplissage pouvant comprendre un matériau dont une densité est inférieure à la densité du matériau composite ;
- le renfort fibreux présente un bord amont et un bord aval, la cavité étant en outre ouverte sur l'un au moins parmi le bord amont et le bord aval ; et/ou
- l'attache est un pivot.

Selon un deuxième aspect non revendiqué, il est proposé un aubage statique d'une turbomachine comprenant au moins une aube conforme au premier aspect et un moyeu, l'attache de l'aube étant montée pivotante sur le moyeu autour d'un axe de calage.

Selon un troisième aspect non revendiqué, il est proposé une turbomachine comprenant un aubage statique conforme au deuxième aspect, comprenant en outre une soufflante carénée ou une hélice non carénée, une section de compression et une section de turbine, l'aubage statique étant l'un au moins des aubages suivants : un redresseur caréné de la soufflante, un redresseur non caréné de l'hélice, un redresseur de la section de compression, un distributeur de la section de turbine.

Selon un quatrième aspect non revendiqué, il est proposé un aéronef comprenant au moins une turbomachine conforme au troisième aspect, qui peut être fixée sur l'aéronef grâce à un pylône.

Selon un cinquième aspect non revendiqué, il est proposé un procédé de fabrication d'une aube conforme au premier aspect comprenant les étapes suivantes :
- réaliser un pied d'aube comprenant un renfort fibreux comprenant noyé dans une matrice, le renfort fibreux comprenant une première peau et une deuxième peau séparées par une cavité ouverte sur une face inférieure du renfort fibreux ;
- insérer une nervure d'une attache dans la cavité du pied d'aube de sorte que la nervure s'étende entre des faces internes de la première peau et de la deuxième peau et qu'une plateforme s'étende en dehors de la cavité ;
- fixer mécaniquement la première peau et la deuxième peau à la nervure de l'attache.

Optionnellement, l'étape de réalisation du pied d'aube comprend les sous-étapes suivantes, préalablement à l'étape d'insertion de la nervure :
- insérer successivement au moins une pièce de remplissage et au moins une pièce de conformation dans la cavité ;
- placer l'ensemble formé par le renfort fibreux, l'au moins une pièce de remplissage et l'au moins une pièce de conformation dans un moule ; et
- injecter la matrice.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe schématique d'un exemple de réalisation d'une aube conforme à un premier mode de réalisation de l'invention ;
La figure 2 est une vue en perspective et schématique d'un exemple de réalisation d'un renfort fibreux pouvant être utilisé pour la réalisation d'une aube conforme à un mode de réalisation de l'invention ;
La figure 3 une vue en coupe schématique d'un exemple de réalisation d'une aube conforme à un deuxième mode de réalisation de l'invention ;
La figure 4 est une vue schématique, en coupe axiale et partielle d'un exemple de turbomachine du type USF comprenant une seule hélice non carénée et un redresseur non caréné auquel s'applique l'invention ; et

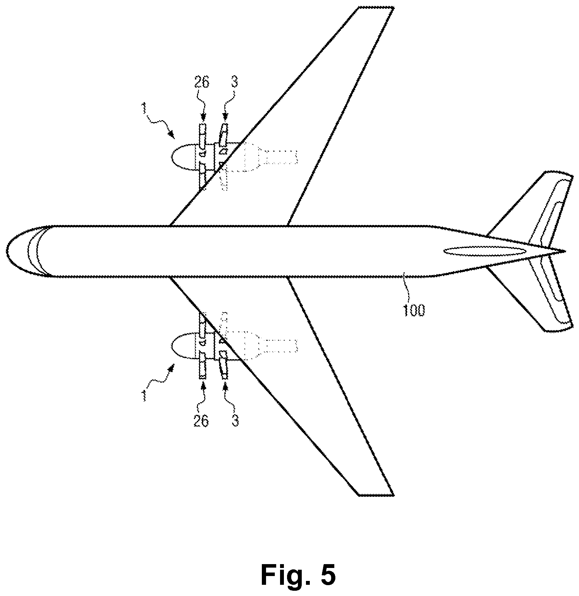

La figure 5 est une vue schématique d'un exemple d'aéronef pouvant comprendre au moins une turbomachine conforme à un mode de réalisation de l'invention.

Sur l'ensemble des figures, les éléments similaires portent des références identiques.

### DESCRIPTION DETAILLEE DE L'INVENTION

Une turbomachine 1, notamment d'aéronef 100, comprend de manière conventionnelle au moins une soufflante ou au moins une hélice 26, une section de compression 27, une chambre de combustion 28, une section de turbine 29 en aval de la chambre de combustion 28, et un carter d'échappement.

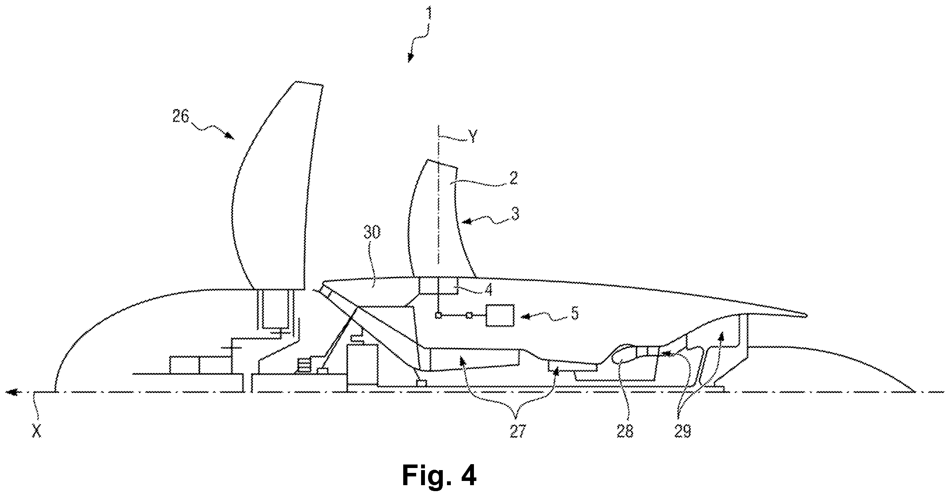

L'invention s'applique à tout aubage statique 2 (c'est-à-dire non tournant) d'une turbomachine 1, qu'il s'agisse d'un aubage 2 redresseur d'une soufflante ou d'une hélice 26, d'un aubage 2 redresseur de la section de compression 27 ou d'un aubage 2 distributeur de la section de turbine 29. A titre d'exemple, la turbomachine 1 peut notamment être un turbopropulseur du type USF comprenant une hélice non carénée 26, auquel cas l'aubage statique 2 est non caréné et s'étend en aval de l'hélice 26 (voir figure 4). Dans un autre exemple, la turbomachine 1 peut être un turboréacteur comprenant une soufflante carénée, auquel cas l'aubage statique 2 peut correspondre au redresseur caréné s'étendant en aval de la soufflante qui est connu sous la désignation anglaise de « outer guide vane ».

Dans la présente demande, l'amont et l'aval sont définis par rapport au sens d'écoulement des gaz à travers l'aubage statique 2. On appelle axe X l'axe de rotation du rotor de l'hélice 26 (respectivement, de la soufflante). La direction axiale correspond à la direction de l'axe X et une direction radiale est une direction perpendiculaire à cet axe X et passant par lui. Par ailleurs, la direction circonférentielle (ou tangentielle) correspond à une direction perpendiculaire à l'axe X et ne passant pas par lui. Sauf précision contraire, interne et externe sont utilisés en référence à une direction radiale de sorte que la partie ou la face interne d'un élément est plus proche de l'axe X que la partie ou la face externe du même élément.

L'aube 3 sera ainsi définie par rapport à l'axe X du rotor associé à l'aubage statique 2 (qu'il s'agisse de l'axe de rotation de la soufflante ou de l'hélice 26 pour un redresseur de soufflante, l'axe de rotation du rotor du compresseur pour un redresseur de section de compression 27 ou encore l'axe de rotation du rotor de la turbine pour un distributeur de section de turbine 29 sur lequel elle est destinée à être montée.

Dans ce qui suit, l'invention sera décrite dans le cas d'aubes 3 à calage variable, c'est-à-dire des aubes 3 montées à pivotement autour d'un axe de calage Y sur le moyeu 4 de l'aubage 2. Ceci n'est cependant pas limitatif, les aubes 3 pouvant être fixes par rapport au moyeu 4 lorsque la soufflante est carénée, le moyeu 4 correspondant alors à la virole du carter intermédiaire (qui est situé entre le carter du compresseur base pression et le carter du compresseur haute pression).

L'aubage statique 2 comprend un moyeu 4 monté fixe par rapport à un carter 30 de la turbomachine 1. Il est donc non tournant. Les aubes 3 de l'aubage 2 s'étendent sensiblement radialement par rapport à l'axe X.

Les aubes 3 sont ici à calage variable. L'aubage 2 comprend alors un mécanisme d'actionnement 5 permettant de modifier l'angle de calage des aubes 3 de l'aubage 2 afin d'adapter les performances de la turbomachine 1 aux différentes phases de vol. De plus, chaque aube 3 comprend une attache 6 (ou pivot) disposée en pied d'aube 8. L'attache 6 est montée rotative par rapport au moyeu 4 autour de l'axe de calage Y. Plus précisément, l'attache 6 est montée rotative à l'intérieur d'un logement ménagé dans le moyeu 4, par l'intermédiaires de billes ou d'autres éléments roulants.

De manière connue en soi, l'attache 6 comprend une paroi présentant une surface extérieure ayant une forme de révolution. La surface extérieure peut par exemple présenter des gorges circulaires propres à former des chemins de roulement 6a pour des billes ou d'autres éléments roulants.

L'aube 3 comprend une pale 7 à profil aérodynamique propre à être placée dans un flux d'air lorsque la turbomachine 1 est en fonctionnement afin de générer une portance, ainsi qu'un pied d'aube 8 configuré pour être fixé au moyeu 4 de l'aubage 2 par l'intermédiaire de l'attache 6.

La pale 7 à profil aérodynamique est conformée de sorte à définir un intrados, un extrados, un bord d'attaque 9 et un bord de fuite 10. De manière connue en soi, le bord d'attaque 9 est configuré pour s'étendre en regard de l'écoulement des gaz entrant dans la turbomachine 1. Il correspond à la partie antérieure d'un profil aérodynamique qui fait face au flux d'air et qui divise l'écoulement d'air en un écoulement d'intrados et en un écoulement extrados. Le bord de fuite 10 quant à lui correspond à la partie postérieure du profil aérodynamique, où se rejoignent les écoulements intrados et extrados.

L'aube 3 comprend deux peaux 12, qui sont raccordées l'une à l'autre et s'étendent globalement l'une en face de l'autre. En particulier, les peaux 12 sont raccordées en tête d'aube sur toute la corde de l'aube 3, au niveau du bord d'attaque et au niveau du bord de fuite. Les peaux 12 sont réalisées dans un matériau composite comprenant un renfort fibreux 13 densifié par une matrice. Elles peuvent être monolithiques et être réalisées d'une seule pièce à partir d'une préforme fibreuse avec épaisseur évolutive. En variante, le renfort fibreux 13 peut comprendre une première peau 12 pour l'intrados et une deuxième peau 12 pour l'extrados, qui sont raccordées par exemple à proximité de la tête de l'aube 3.

Le renfort fibreux 13 peut comprendre des arrangements fibreux tridimensionnels tissés ou tricotés. Il est par ailleurs réalisé de telle sorte qu'il comprend des fils de chaine qui s'étendent continument à la fois à l'intérieur de la partie de pale 7 à profil aérodynamique et à l'intérieur de la partie de pied d'aube 8. En variante, le renfort fibreux 13 peut comprendre des arrangements fibreux bidimensionnels stratifiés. Les fibres du renfort fibreux 13 comprennent au moins l'un des matériaux suivants : carbone (typiquement, du carbure de silicium), verre, aramide, polypropylène et/ou céramique (typiquement, une céramique oxyde). La matrice comprend typiquement une matrice organique (thermodurcissable, thermoplastique ou élastomère) ou une matrice en carbone. Par exemple, la matrice comprend une matière plastique, typiquement un polymère, par exemple époxyde, bismaléimide ou polyimide.

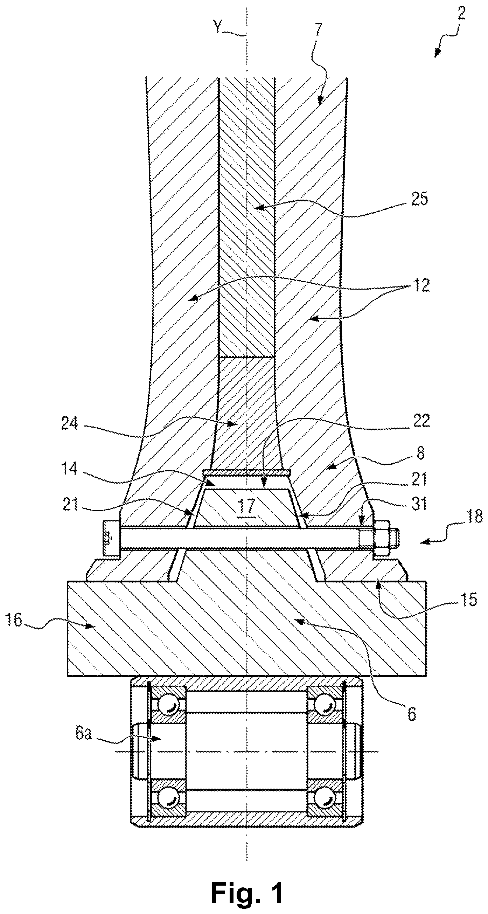

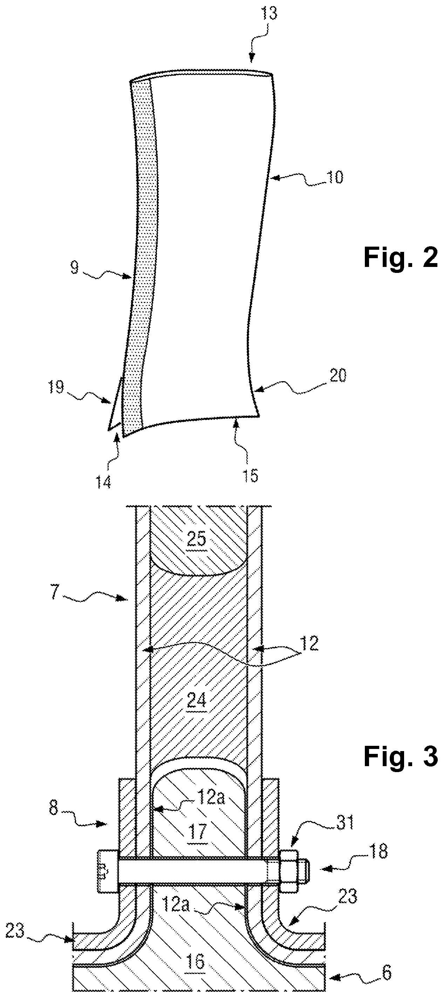

Les peaux 12 du renfort fibreux 13 sont séparées par une cavité 14 qui est ouverte sur une face inférieure 15 du pied d'aube 8, ce qui permet de réduire encore la masse de l'aube 3 en comparaison avec les aubes 3 conventionnelles. On notera que la face inférieure 15 du pied d'aube 8 correspond à la face du pied d'aube 8 qui est en face de la plateforme 16 (présentée plus loin et visible sur les figures 1 et 3) de l'attache 6 lorsque le pied d'aube 8 est assemblé avec l'attache 6. La cavité 14 n'est pas débouchante (ouverte) en tête d'aube.

Dans le cas où les peaux 12 sont obtenues par tissage tridimensionnel et sont monolithiques, la cavité 14 est obtenue en réalisant une déliaison dans l'ébauche fibreuse entre deux couches successives de chaîne, depuis une zone dite non déliée (comprenant ici la tête de l'aube 3) jusqu'à l'extrémité radiale interne des peaux 12, où débouche la cavité 14. Pour cela, au niveau de la déliaison, les torons de chaîne de deux couches successives de l'ébauche fibreuse ne sont pas reliés par des torons de trame, ce qui forme la cavité 14. De préférence, la déliaison s'étend au sein de la pale 7 à profil aérodynamique et s'étend jusqu'à la face inférieure 15 du pied d'aube 8 (afin de permettre l'insertion de la nervure 17 de l'attache 6). Dans la partie de l'ébauche destinée à s'étendre dans le flux d'air (c'est-à-dire la pale 7 à profil aérodynamique), la cavité 14 n'est pas ouverte sur le bord d'attaque 9 ni le bord de fuite 10. Les parties de l'ébauche fibreuses formant le bord d'attaque 9 et le bord de fuite 10 ne sont donc pas déliées. En revanche, dans la partie de l'ébauche formant le pied d'aube 8 (c'est-à-dire la zone qui est destinée à être fixée sur l'attache 6), la cavité 14 peut également être ouverte sur les bords amont 19 et aval 20 du pied d'aube 8 (et qui s'étendent dans le prolongement du bord d'attaque 9 et du bord de fuite 10 de la pale 7), respectivement. Les parties de l'ébauche fibreuses formant le bord amont 19 et le bord aval 20 du pied d'aube 8 peuvent donc être déliées.

On pourra se référer à titre d'exemple au document EP2588758 au nom de la Demanderesse pour plus de détails sur la réalisation de déliaisons.

L'aube 3 peut en outre comprendre une ou plusieurs pièces de remplissage 25, typiquement des pièces en mousse ou tout autre matériau adapté présentant une densité plus faible que le matériau composite des peaux 12, placées dans la partie de la cavité 14 s'étendant au sein de la pale 7 à profil aérodynamique afin de raidir les peaux 12 et/ou conférer aux peaux 12 la forme finale de la pale 7. Les pièces de remplissage 25 présentent par exemple une densité de l'ordre d'une centaine de kg/m³ et une raideur de l'ordre d'une centaine de MPa. Elles peuvent notamment comprendre une mousse, telle qu'une mousse d'origine organique (polyethacrylimide, polytéréphtalate d'éthylène (PET), polychlorure de vinyle (PVC), polyétherimide (PEI), polyvinyl, carbone, polyisocyanurate, polyuréthane, etc.) ou métallique (notamment en alliage d'aluminium), ou encore un nid d'abeilles du type Nomex^{®} (comprenant des fibres aramides calandrées en feuilles et recouvertes de résine phénolique), en kevlar, en fibres de verre ou encore en aluminium.

L'attache 6 est configurée pour recevoir le pied d'aube 8 et le fixer au moyeu 4 de l'aubage statique 2. A cet effet, l'attache 6 comprend en outre une plateforme 16 et une nervure 17 faisant saillie depuis la plateforme 16. La nervure 17 est configurée pour pénétrer dans la cavité 14 de sorte à s'étendre entre des faces internes 12a de la première peau 12 et de la deuxième peau 12. Les première et deuxième peaux 12 sont par ailleurs fixées mécaniquement sur la nervure 17 par un système de fixation 18. Cette configuration permet de fixer de manière fiable l'aube 3 au moyeu 4, dans un encombrement radial et transversal réduit, en exploitant la cavité 14 interne de la pale 7 (située entre les deux peaux 12) afin de transmettre les efforts de l'aubage 2 vers l'attache 6. Plus précisément, le système de fixation 18 traverse la première peau 12, la nervure 17 et la deuxième peau 12. La partie de l'attache 6 qui vient en appui contre le pied d'aube 8 est donc logée à l'intérieur du pied d'aube 8, de sorte qu'elle n'impacte pas l'encombrement radial ni transversal de l'aubage 2 - contrairement aux attaches conventionnelles, qui sont placées à l'extérieur du pied d'aube 8 et empiètent donc nécessairement sur l'espace disponible dans l'aubage 2. Elle permet ainsi de réduire l'espace inter-pièce et/ou d'utiliser le volume gagné pour d'autres fonctions pour le moteur (passage de canalisation ou de câblage, ajout de fonction sur les pièces environnantes, etc.).

La nervure 17 étant logée dans la cavité 14 du pied d'aube 8, sa hauteur (c'est-à-dire sa dimension suivant l'axe de calage Y) peut être plus grande que la hauteur des attaches conventionnelles, ce qui améliore la reprise des moments générés par les efforts aérodynamiques. La nervure 17 pouvant présenter une hauteur importante, elle présente des surfaces d'appui plus grandes, ce qui réduit les contraintes de matage (direction hors plan).

La nervure 17 s'étend le long de la corde de l'aube 3, entre le bord amont 19 et le bord aval 20 du pied d'aube 8, qui s'étendent dans le prolongement du bord d'attaque 9 et du bord de fuite 10 de la pale 7, respectivement. Sa forme suit sensiblement à la forme du pied d'aube 8. Par exemple, le pied d'aube 8 et la nervure 17 peuvent être sensiblement rectilignes. Dans une forme de réalisation, et comme indiqué ci-avant, la cavité 14 peut également être ouverte sur le bord amont 19 et le bord aval 20 du pied d'aube 8. La nervure 17 s'étend alors le long de toute la cavité 14, du bord amont 19 jusqu'au bord aval 20 du pied d'aube 8, et les peaux 12 sont fixées sur la nervure 17 sur toute leur largeur (suivant la direction axiale, comme illustré sur les figures 1 et 2).

La nervure 17 comprend deux flancs 21 et un sommet 22. Les flancs 21 sont reliés à la plateforme 16 au niveau d'une bordure inférieure, dont un rayon de courbure est suffisamment grand pour limiter les concentrations de contraintes. Dans une forme de réalisation illustrée sur la figure 1, les flancs 21 sont inclinés et convergent en direction du sommet 22, de sorte que l'épaisseur de la nervure 17 est plus importante à proximité de la plateforme 16 qu'à son sommet 22. Cette configuration de la nervure 17 permet ainsi de s'adapter au profil aérodynamique de l'aube 3 et de faciliter le montage du pied d'aube 8. En variante (voir figure 3), les flancs 21 sont sensiblement parallèles et s'étendent globalement parallèlement à l'axe de calage Y. L'épaisseur de la nervure 17 est alors sensiblement constante de la plateforme en direction du sommet. Dans une forme de réalisation, les flancs 21 sont plans. En variante, les flancs 21 peuvent être courbes et symétriques par rapport à un plan passant par l'axe Y, la courbure des flancs 21 étant concave de sorte que l'épaisseur de la nervure 17 décroît en direction du sommet 22. Un rayon de la courbure des flancs 21 peut alors être compris entre 15 mm et 25 mm. Selon une autre variante encore, les flancs 21 peuvent présenter une première partie plane, par exemple parallèle à l'axe Y ou inclinée en direction du sommet 22, puis courbe jusqu'au sommet avec un rayon de courbure de l'ordre de 20 mm.

Afin de faciliter le montage des peaux 12 sur l'attache 6 et d'éviter tout risque de blocage, les faces internes 12a des peaux 12 sont plus évasées que les flancs 21 de la nervure 17 (voir figure 1). Plus précisément, les faces internes 12a des peaux 12 forment un premier angle avec un plan de symétrie du pied d'aube 8 (plan normal à la figure comprenant l'axe de calage Y), et les flancs 21 forment un deuxième angle avec ce plan ; le premier angle est alors plus grand que le deuxième angle (voir figure 1).

De préférence, l'extrémité radiale interne des peaux 12 vient en appui contre la plateforme 16. Dans l'exemple illustré sur la figure 1, l'extrémité radiale interne des peaux 12 correspond à la face inférieure 15 du pied d'aube 8. Dans l'exemple illustré sur la figure 3, les peaux 12 sont enfoncées sur la nervure 17 de sorte que leur face interne 12a se trouve en contact à la fois avec les flancs de la nervure 17 et la plateforme 16. L'extrémité radiale interne des peaux 12 correspond alors à leur face interne 12a. Quelle que soit la variante de réalisation, la plateforme 16 et les extrémités radiales internes (15/12a) des peaux 12 servent donc de surfaces de référence pour le positionnement radial de l'aube 3 par rapport à l'attache 6.

Le positionnement tangentiel de l'aube 3 est assuré quant à lui par le contact des faces internes 12a des peaux 12 avec la nervure 17, puisque le système de fixation 18 plaque les peaux 12 de l'aube 3 contre les flancs 21 de la nervure 17. Les flancs 21 de la nervure 17 et les faces internes 12a des peaux 12 forment donc les surfaces de référence pour le positionnement tangentiel du pied d'aube 8 par rapport à l'attache 6.

Optionnellement, les surfaces de référence du pied d'aube 8 sont réalisées par usinage d'une épaisseur sacrificielle du matériau composite. L'épaisseur sacrificielle correspond à une partie non structurale de l'aube 3, qui peut par exemple être obtenue par l'ajout de plis de matériau composite préimprégnés et co-injectés avec la préforme du renfort fibreux 13. Les plis de matériau composite peuvent notamment comprendre des fibres de verre noyées dans une matrice, de préférence une matrice compatible avec la matrice du renfort fibreux 13 des peaux 12 (typiquement, la même matrice).

Le système de fixation 18 peut comprendre tout moyen adapté pour fixer mécaniquement le pied d'aube 8 sur l'attache 6. Par exemple, le système de fixation 18 comprend un boulon 31 traversant la première peau 12, la nervure 17 et la deuxième peau 12. Dans une forme de réalisation, le système de fixation 18 comprend plusieurs boulons 31 répartis entre une extrémité amont et une extrémité aval de la nervure 17. Les vis des boulons 31 sont alors insérées dans des passages traversants formés dans les peaux 12 et la nervure 17. Un même boulon 31 traverse donc les deux peaux 12 et la nervure 17.

Lorsque la nervure 17 s'étend sur toute la corde de l'aube 3, le système de fixation 18 comprend des boulons 31 répartis de manière équidistante du bord amont 19 jusqu'au bord aval 20 du pied d'aube 8. Par exemple, pour une aube 3 de redresseur d'un turbopropulseur du type USF, le système de fixation 18 comprend entre trois et six boulons 31 répartis de manière équidistante entre le bord d'attaque 9 et le bord de fuite 10 de l'aube 3. Optionnellement, un lamage peut être réalisé dans la face externe des peaux 12 afin d'améliorer la surface d'appui des têtes de vis des boulons 31.

En variante ou en plus, le système de fixation 18 peut comprendre une plaque métallique 23 (voir figure 3) rapportée et fixée par boulonnage sur chaque peau du renfort fibreux 13. Optionnellement, un lamage peut être réalisé dans la plaque 23 afin d'améliorer la surface d'appui des têtes de vis des boulons 31. La plaque 23 peut être sensiblement plane et être plaquée contre la peau 12 correspondante par les boulons 31. Dans la variante de réalisation dans laquelle les faces internes 12a des peaux 12 sont également en contact avec la plateforme 16 (voir figure 3 par exemple), la plaque 23 peut être coudée et comprendre une première portion configurée pour plaquer la peau 12 en regard du renfort fibreux 13 contre le flanc 21 correspondant de la nervure 17 et une deuxième portion configurée pour plaquer l'extrémité libre de cette même peau 12 contre la plateforme 16.

La plaque 23 (droite ou coudée) permet en particulier d'aider à la reprise des moments, notamment en cas d'ingestion d'objet, et la dissipation d'énergie par déformation plastique en cas de flexion importante de l'aube 3.

Dans une forme de réalisation, l'aube 3 comprend en outre une pièce de conformation 24, placée dans la cavité 14, à proximité du sommet 22 de la nervure 17, afin de renforcer la raideur de l'aube 3 en bas de pale 7. La pièce de conformation 24 a également pour objectif d'assurer une transition de raideur progressive dans la direction radiale, afin d'éviter les concentrations de contraintes en sortie de la zone de bridage.

La pièce de conformation 24 est positionnée dans la cavité 14 de sorte à s'étendre à proximité de la nervure 17 tout en ménageant un jeu fonctionnel entre la pièce de conformation 24 et la nervure 17 afin d'assurer le montage du pied d'aube 8. Le jeu peut être de l'ordre de quelques millimètres par exemple.

Le cas échéant, la pièce de conformation 24 est placée entre le sommet 22 de la nervure 17 et la ou les pièces de remplissage 25.

La pièce de conformation 24 peut notamment être réalisée dans un matériau composite comprenant un renfort fibreux noyé dans une matrice, de préférence une matrice compatible avec la matrice du renfort fibreux 13 des peaux 12 (typiquement, la même matrice). Le renfort fibreux de la pièce de conformation 24 peut comprendre notamment des fibres dont le module d'Young est supérieur à 5 GPa, par exemple des fibres de carbone, d'aramide, de verre ou de basalte.

### Procédé de fabrication

Une aube 3 conforme à l'invention peut notamment être obtenue conformément aux étapes suivantes.

Une ébauche fibreuse des deux peaux 12 est réalisée, par exemple par tissage ou tricotage. Dans un exemple de réalisation, l'ébauche fibreuse est tissée en trois dimensions avec réalisation d'une ou plusieurs déliaisons afin d'obtenir les deux peaux 12 et la cavité 14. Les deux peaux 12 sont monolithiques au niveau de la tête, du bord d'attaque 9 et du bord de fuite 10 de la pale 7. La cavité 14 est ouverte sur la face interne 15 du pied d'aube 8 et s'étend jusqu'au sein de la pale 7.

En variante, les peaux 12 peuvent être tissées séparément en deux ou trois dimensions, puis raccordées lors de la cuisson (co-cuisson).

Le cas échéant, la cavité 14 est également ouverte sur le bord amont 19 et le bord aval 20 du pied d'aube 8.

Au moins une pièce de remplissage 25 est ensuite placée au fond de la cavité 14. Puis, au moins une pièce de conformation 24 est placée dans la cavité 14, par exemple en appui contre la ou les pièces de remplissage 25. La pièce de conformation 24 rend étanche la cavité 14 et est positionnée de manière à laisser un jeu avec la nervure 17 après assemblage.

Optionnellement, des plis de matériau composite préimprégné sont placés contre les surfaces des peaux destinées à former des surfaces de référence, à savoir les faces internes 12a des peaux 12, dans la zone destinée à venir en contact avec les flancs 21 de la nervure 17, et sur l'extrémité radiale interne des peaux 12.

L'ensemble formé par l'ébauche fibreuse, les pièces de remplissage 25 et de conformation 24 et le cas échéant les plis de matériau composite sont placées dans un moule présentant un logement ayant la forme de la pièce finale moulée (à savoir la pale 7 et le pied de l'aube 3) et de la matière (la « matrice » du matériau composite), généralement plastique, est injectée dans le moule de manière à imprégner le renfort fibreux 13 des peaux 12 et les pièces de conformation et de remplissage. L'injection de la matrice peut être réalisée par une technique d'injection du type RTM ou VARRTM. Dans le cas d'une matière plastique, la matrice injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant. De manière connue en soi, la matière plastique est ensuite chauffée de manière à provoquer une polymérisation de la matière plastique, par exemple par réticulation. A cet effet, le moule est placé dans une étuve.

La pièce obtenue est ensuite démoulée puis, optionnellement, détourée par usinage afin de supprimer les sur-longueur et d'obtenir une pièce présentant la forme désirée, malgré une éventuelle rétractation des fibres du renfort fibreux 13 pendant la polymérisation de la matière plastique. Les épaisseurs sacrificielles sont notamment usinées afin d'obtenir les surfaces de référence du pied d'aube 8. Des passages traversants sont par ailleurs usinés dans les peaux 12 afin de recevoir le système de fixation 18. Le cas échéant, des lamages sont également usinés autour des passages traversants.

L'attache 6 est ensuite mise en position sur le pied d'aube 8 en plaçant la nervure 17 dans la cavité 14, entre les faces internes 12a des peaux 12. Après insertion de l'attache 6, le sommet 22 de la nervure 17 s'étend de préférence à faible distance de la pièce de conformation 24.

De préférence, des passages traversants, destinés à recevoir le système de fixation 18 et s'étendant en regard des passages traversants usinés dans les peaux 12, sont formés à travers les flancs 21 de la nervure 17 avant son insertion dans la cavité 14.

Enfin, le système de fixation 18 est rapporté et fixé sur les peaux 12 et l'attache 6 afin de solidariser le pied d'aube 8 et la nervure 17. Par exemple, des boulons 31 sont insérés et fixés dans les passages traversants des peaux 12 et de l'attache 6.

Le procédé de fabrication est donc plus simple que pour les aubes ayant des attaches conventionnelles, le nombre de composants nécessaires à la fabrication de l'aube 3 étant réduit et les étapes de tissage ou tricotage de la préforme fibreuse étant simplifiées.

## Revendications

1. Aube (3) d'un aubage (2) statique d'une turbomachine (1) comprenant :
- un pied d'aube (8) comprenant un renfort fibreux (13) noyé dans une matrice, le renfort fibreux (13) comprenant une première peau (12) et une deuxième peau (12) séparées par une cavité (14) ouverte sur une face inférieure (15) du pied d'aube (8) ;
- une attache (6) configurée pour recevoir le pied d'aube (8) et le fixer à un moyeu (4) de l'aubage (2), l'attache (6) comprenant une plateforme (16) et une nervure (17) faisant saillie depuis la plateforme (16), la nervure (17) étant configurée pour pénétrer dans la cavité (14) de sorte à s'étendre entre des faces internes (12a) de la première peau (12) et de la deuxième peau (12) ; et
- un système de fixation (18) configuré pour fixer mécaniquement la première peau (12) et la deuxième peau (12) à la nervure (17) de l'attache (6),
l'aube (3) étant **caractérisée en ce que** le système de fixation traverse la première peau (12), la nervure (17) et la deuxième peau (12).

2. Aube (3) selon la revendication 1, dans laquelle la nervure (17) comprend deux flancs (21) reliés à la plateforme (16) et un sommet (22) raccordant les deux flancs (21), une épaisseur de la nervure (17) étant décroissante de la plateforme (16) en direction du sommet (22).

3. Aube (3) selon la revendication 1, dans lequel les faces internes (12a) des peaux (12) sont plus évasées que les flancs (21) de la nervure (17).

4. Aube (3) selon la revendication 1, dans laquelle la nervure (17) comprend deux flancs (21) reliés à la plateforme (16) et un sommet (22) raccordant les deux flancs (21), une épaisseur de la nervure (17) étant sensiblement constante de la plateforme (16) en direction du sommet (22).

5. Aube (3) selon l'une des revendications 1 à 4, dans laquelle la première et la deuxième peau (12) sont en outre en butée contre la plateforme (16).

6. Aube (3) selon l'une des revendications 1 à 5, dans laquelle le système de fixation (18) comprend l'un au moins des éléments suivants : un boulon (31) ; une plaque (23) conformée pour venir en contact avec une face externe des peaux (12).

7. Aube (3) selon la revendication 6, dans laquelle le système de fixation (18) comprend un boulon (31), le boulon (31) traversant la première peau (12), la nervure (17) et la deuxième peau (12).

8. Aube (3) selon l'une des revendications 1 à 7, comprenant en outre une pièce de conformation (24) logée dans la cavité (14) à distance d'un sommet (22) de la nervure (17).

9. Aube (3) selon la revendication 8, dans laquelle la pièce de conformation (24) comprend un matériau composite supplémentaire comprenant un renfort fibreux supplémentaire noyé dans une matrice supplémentaire, le renfort fibreux (13) supplémentaire comprenant des fibres présentant un module d'Young au moins égal à 5 GPa, par exemple des fibres de carbone, d'aramide, de verre ou de basalte.

10. Aube (3) selon l'une des revendications 8 et 9, comprenant en outre une pièce de remplissage (25) logée dans la cavité (14) entre un sommet (22) de l'aube (3) et la pièce de conformation (24), la pièce de remplissage (25) pouvant comprendre un matériau dont une densité est inférieure à la densité du matériau composite.

11. Aube (3) selon l'une des revendications 1 à 10, dans laquelle le renfort fibreux (13) présente un bord amont (19) et un bord aval (20), la cavité (14) étant en outre ouverte sur l'un au moins parmi le bord amont (19) et le bord aval (20).

12. Aube (3) selon l'une des revendications 1 à 11, dans laquelle l'attache (6) est un pivot.

## Patentansprüche

1. Schaufel (3) einer feststehenden Schaufelanordnung (2) einer Turbomaschine (1), umfassend:
- einen Schaufelfuß (8) mit einer Faserverstärkung (13), die in einer Matrix eingebettet ist, wobei die Faserverstärkung (13) eine erste Haut (12) und eine zweite Haut (12) umfasst, die durch einen Hohlraum (14) getrennt sind, der an einer Unterseite (15) des Schaufelfußes (8) geöffnet ist;
- eine Befestigung (6), die dazu ausgelegt ist, den Schaufelfuß (8) aufzunehmen und ihn an einer Nabe (4) der feststehenden Schaufelanordnung (2) zu befestigen, wobei die Befestigung (6) eine Plattform (16) und eine von der Plattform (16) vorspringende Rippe (17) umfasst, welche so ausgestaltet ist, dass sie in den Hohlraum (14) eindringt, um sich zwischen Innenflächen (12a) der ersten Haut (12) und der zweiten Haut (12) zu erstrecken; und
- ein Befestigungssystem (18), das dazu ausgelegt ist, die erste Haut (12) und die zweite Haut (12) mechanisch an der Rippe (17) der Befestigung (6) zu befestigen,
wobei die Schaufel (3) **dadurch gekennzeichnet ist, dass** das Befestigungssystem die erste Haut (12), die Rippe (17) und die zweite Haut (12) durchgreift.

2. Schaufel (3) nach Anspruch 1, wobei die Rippe (17) zwei an der Plattform (16) angeschlossene Seitenflächen (21) und eine diese Seitenflächen (21) verbindende Spitze (22) umfasst, wobei die Dicke der Rippe (17) von der Plattform (16) in Richtung der Spitze (22) abnimmt.

3. Schaufel (3) nach Anspruch 1, wobei die Innenflächen (12a) der Häute (12) mehr aufgeweitet sind als die Seitenflächen (21) der Rippe (17).

4. Schaufel (3) nach Anspruch 1, wobei die Rippe (17) zwei an der Plattform (16) angeschlossene Seitenflächen (21) und eine diese verbindende Spitze (22) umfasst, wobei die Dicke der Rippe (17) von der Plattform (16) in Richtung der Spitze (22) im Wesentlichen konstant ist.

5. Schaufel (3) nach einem der Ansprüche 1 bis 4, wobei die erste und die zweite Haut (12) zudem an der Plattform (16) anliegen.

6. Schaufel (3) nach einem der Ansprüche 1 bis 5, wobei das Befestigungssystem (18) mindestens eines der folgenden Elemente umfasst:
- einen Bolzen (31);
- eine Platte (23), die so geformt ist, dass sie mit einer Außenfläche der Häute (12) in Kontakt kommt.

7. Schaufel (3) nach Anspruch 6, wobei das Befestigungssystem (18) einen Bolzen (31) umfasst, der die erste Haut (12), die Rippe (17) und die zweite Haut (12) durchdringt.

8. Schaufel (3) nach einem der Ansprüche 1 bis 7, ferner umfassend ein Formteil (24), das im Hohlraum (14) in Abstand von einer Spitze (22) der Rippe (17) untergebracht ist.

9. Schaufel (3) nach Anspruch 8, wobei das Formteil (24) ein zusätzliches Verbundmaterial umfasst, das eine zusätzliche Faserverstärkung umfasst, die in einer zusätzlichen Matrix eingebettet ist, wobei die zusätzliche Faserverstärkung (13) Fasern umfasst, die einen Elastizitätsmodul von mindestens 5 GPa aufweisen, beispielsweise Kohlenstoff-, Aramid-, Glas- oder Basaltfasern.

10. Schaufel (3) nach einem der Ansprüche 8 und 9, ferner umfassend ein Füllteil (25), das im Hohlraum (14) zwischen einer Spitze (22) der Schaufel (3) und dem Formteil (24) untergebracht ist, wobei das Füllteil (25) ein Material aufweisen kann, dessen Dichte geringer ist als die Dichte des Verbundmaterials.

11. Schaufel (3) nach einem der Ansprüche 1 bis 10, wobei die Faserverstärkung (13) eine Vorderkante (19) und eine Hinterkante (20) umfasst, und der Hohlraum (14) zudem an mindestens einer der beiden Kanten (19, 20) geöffnet ist.

12. Schaufel (3) nach einem der Ansprüche 1 bis 11, wobei die Befestigung (6) ein Drehzapfen ist.

## Claims

1. A vane (3) of a static vane assembly (2) of a turbomachine (1) comprising:
- a vane root (8) comprising a fiber reinforcement (13) embedded in a matrix, the fiber reinforcement (13) comprising a first skin (12) and a second skin (12) separated by a cavity (14) open onto a lower face (15) of the vane root (8);
- a fastener (6) configured to receive the vane root (8) and to attach it to a hub (4) of the vane assembly (2), the fastener (6) comprising a platform (16) and a rib (17) protruding from the platform (16), the rib (17) being configured to enter into the cavity (14) so as to extend between inner faces (12a) of the first skin (12) and of the second skin (12); and
- an attaching system (18) configured to mechanically attach the first skin (12) and the second skin (12) to the rib (17) of the fastener (6),
the vane (3) being **characterized in that** the attaching system traverses the first skin (12), the rib (17) and the second skin (12).

2. The vane (3) as claimed in claim 1, wherein the rib (17) comprises two side faces (21) connected to the platform (16) and an apex (22) connecting the two side faces (21), a thickness of the rib (17) being decreasing from the platform (16) in the direction of the apex (22).

3. The vane (3) as claimed in claim 1, wherein the inner faces (12a) of the skins (12) are more flared than the side faces (21) of the rib (17).

4. The vane (3) as claimed in claim 1, wherein the rib (17) comprises two side faces (21) connected to the platform (16) and an apex (22) connecting the two side faces (21), a thickness of the rib (17) being substantially constant from the platform (16) in the direction of the apex (22).

5. The vane (3) as claimed in one of claims 1 to 4, wherein the first and the second skin (12) are moreover in abutment against the platform (16).

6. The vane (3) as claimed in one of claims 1 to 5, wherein the attaching system (18) comprises at least one of the following elements: a bolt (31); a plate (23) shaped to come into contact with an outer face of the skins (12).

7. The vane (3) as claimed in claim 6, wherein the attaching system (18) comprises a bolt (31), the bolt (31) traversing the first skin (12), the rib (17) and the second skin (12).

8. The vane (3) as claimed in one of claims 1 to 7, further comprising a shaping part (24) housed in the cavity (14) distant from an apex (22) of the rib (17).

9. The vane (3) as claimed in claim 8, wherein the shaping part (24) comprises an additional composite material comprising an additional fiber reinforcement embedded in an additional matrix, the additional fiber reinforcement (13) comprising fibers having a Young modulus at least equal to 5 GPa, for example fibers of carbon, aramid, glass or basalt.

10. The vane (3) as claimed in one of claims 8 and 9, further comprising a filling part (25) housed in the cavity (14) between an apex (22) of the vane (3) and the shaping part (24), the filling part (25) being able to comprise a material, a density of which is less than the density of the composite material.

11. The vane (3) as claimed in one of claims 1 to 10, wherein the fiber reinforcement (13) has an upstream edge (19) and a downstream edge (20), the cavity (14) being moreover open onto at least one from among the upstream edge (19) and the downstream edge (20).

12. The vane (3) as claimed in one of claims 1 to 11, wherein the fastener (6) is a pivot.
